Europäisches Patentamt

European Patent Office

Office européen des brevets

(11) Publication number: **0 282 288 B1**

# EUROPEAN PATENT SPECIFICATION

(45) Date of publication of patent specification: **29.09.93**  (51) Int. Cl.⁵: **G11B 7/09**

(21) Application number: **88302057.0**

(22) Date of filing: **10.03.88**

(54) **Optical disk system.**

(30) Priority: **12.03.87 JP 57777/87**

(43) Date of publication of application:
**14.09.88 Bulletin 88/37**

(45) Publication of the grant of the patent:
**29.09.93 Bulletin 93/39**

(84) Designated Contracting States:
**DE FR GB IT NL**

(56) References cited:
**JP-A-61 283 035**

**PATENT ABSTRACTS OF JAPAN vol. 9, no.
144 (P-365)(1867) 19 June 1985, & JP-A-60
22745**

**PATENT ABSTRACTS OF JAPAN vol. 9, no.
144 (P-365)(1867) 19 June 1985, & JP-A-60
22746**

**PATENT ABSTRACTS OF JAPAN vol. 8, no.
86 (P-269)(1523) 19 April 1984, & JP-A-59
2236**

**PATENT ABSTRACTS OF JAPAN vol. 10, no.
93 (P-455)(2150) 10 April 1986, & JP-A-60
226030**

(73) Proprietor: **FUJITSU LIMITED**
**1015, Kamikodanaka Nakahara-ku
Kawasaki-shi Kanagawa 211(JP)**

(72) Inventor: **Minami, Akira**
**2-4-4-401, Susukino Midori-ku
Yokohama-shi Kanagawa 227(JP)**
Inventor: **Tanaka, Shigeyoshi**
**878, Shimonoge Takatsu-ku
Kawasaki-shi Kanagawa 213(JP)**

(74) Representative: **Billington, Lawrence Emlyn et
al
HASELTINE LAKE & CO Hazlitt House 28
Southampton Buildings Chancery Lane
London WC2A 1AT (GB)**

PATENT ABSTRACTS OF JAPAN vol. 9, no. 329 (P-416)(2052) 24 December 1985, & JP-A-60 154336

PATENT ABSTRACTS OF JAPAN vol. 9, no. 314 (P-412)(2037) 10 December 1985, & JP-A-60 143441

PATENT ABSTRACTS OF JAPAN vol. 9, no. 308 (P-410)(2031) 04 December 1985, & JP-A-60 138740

IBM TECHNICAL DISCLOSURE BULLETIN. vol. 29, no. 10, March 1987, NEW YORK US pages 4294 - 4295; "OPTICAL DISK SERVO AGC USING LASER POWER CONTROL"

## Description

The present invention relates to an optical disk system. More particularly, it relates to track servo control circuitry in an optical disk system.

A focus servo control and a track servo control must be carried out in an optical disk system. The focus servo control adjusts a position of an object lens to focus a beam emitted from a laser diode onto a track of an optical disk, so that a beam displacement at the track caused by an eccentricity in the motion of the optical disk and a deformation of the optical disk can be compensated. The track servo control adjusts a position of a head to ensure that the head follows the track, to obtain a fine control of the position of the head.

Various different optical disks are available for optical disk systems. Track servo control is effected by using a light reflected from a groove formed in the optical disk. However, this reflected light varies in response to a change of an exposure light for a data read and a data write, a dispersion of a groove shape due to a difference of a manufacturing lot and a difference in manufacturing technique, and a difference in a groove shape, for example, a difference between a U-shaped groove and a V-shaped groove. In an existing track servo control system, a compensation of a different reflection light due to a difference between a write data exposure light and a read data exposure light is known, since the track servo control system receives a write mode signal and a read mode signal. However, in existing track servo control systems, a compensation for the dispersion of the groove shape is not yet practiced, and as a result, a fine position control cannot be fully carried out. In addition, a compensation for differences of the groove shape is not practiced and, as a result, optical disk systems up to now cannot use various types of optical disks having various groove shapes.

JP-A-60 226 030 discloses an optical recording and reproducing device, including a differential amplifier for receiving a differential signal of divided photodetectors detecting focus or tracking error, an amplifier for summing signals from the photodetectors, and a divider for dividing the differential signal by the sum signal. This compensates for differences in light intensity between recording and reproducing.

JP-A-60 138 740 discloses a tracking servo circuit of an optical disc player which automatically sets the tracking servo gain to a proper value independently of optical variation of an optical disc. According to the English-language abstract of this document, a tracking error signal is converted into a binary value of a peak value X by a peak hold circuit and an AD converting circuit, the value is inputted to an operation circuit, a prescribed value Z is divided by the value and a binary data of $Y = Z/X$ is obtained. The data is applied to a multiplier circuit via a memory and a DA converting circuit, multiplied with the tracking error signal and the prescribed value Z is obtained.

According to a first aspect of the present invention, there is provided an optical disk system comprising:-

an optical disk provided with a plurality of grooves for data storage;

an optical head having an object lens, a light source, a light receiver, an optical system provided among the light source, the object lens and the light receiver for directing light emitted from the light source onto the object lens and for introducing light from the groove to the light receiver, a focus actuator for moving the object lens to focus the light from the object lens on the groove, and a track actuator for moving the object lens to position the light from the object lens at a center of the groove;

a focus servo portion for driving the focus actuator;

a track servo portion for driving the track actuator, and having a circuit for receiving signals from the light receiver and generating a track error signal Y on the basis of those signals, a summing circuit for receiving signals from the light receiver and generating a sum signal X representing the amount of light received by the light receiver, a correction circuit including means for dividing the track error signal Y by the sum signal X, and a circuit for phase-adjusting the corrected value;

characterised in that:-

said correction circuit calculates a value $E = (Y \cdot Z)/X$, where Z is a correction factor;

a circuit is provided for detecting a peak of the value E calculated at the correction circuit; and in that:-

control means are provided for controlling the focus servo portion and the track servo portion, and for adjusting a track signal, the control means being operable to produce the correction factor Z as a numerical value representing a degree of imbalance between said detected peak W of the value E and a predetermined normalized amplitude $W_s$, so as to normalize the calculated value E, whereby the track servo control is carried out by using the normalized track error signal E.

An embodiment of the present invention may provide an optical disk system in which a dispersion (variation) of groove shape is compensated for.

An embodiment of the present invention may provide an optical disk system usable for a variety of different optical disks having various groove shapes.

In the present invention, the adjustment of the correction factor Z for normalizing the value E calculated at the correction circuit may be carried out by successively increasing or decreasing the correction factor until the peak of the calculated value E lies within a predetermined range. Alternatively, the adjustment of the correction factor Z for normalizing the value E calculated at the correction circuit may be carried out by calculating $Z = W/W_s$.

The adjustment of the track signal may be carried out just after the energization of the focus servo control and prior to the energization of the track servo control. Alternatively, it may be carried out periodically during normal operation.

The track servo portion may include a digital-to-analog converter receiving the digital correction factor from the control unit and converting it to an analog correction factor to be supplied to the correction circuit. The track error signal generation circuit, the sum reflection light signal generation circuit and the correction circuit may be formed by analog circuits. The peak detection circuit may include an analog peak detection circuit receiving the output from the correction circuit and holding a maximum value, and an analog-to-digital converter converting the analog maximum value held at the peak detection circuit to a digital value and supplying the same to the control unit. The maximum value held at the peak detection circuit can be reset by the control unit.

The correction circuit may include two FETs having the same drain-source resistance and gates which are commonly connected, a first terminal of the first FET receiving the track error signal Y, a first terminal of the second FET receiving the sum light signal X, a second operational amplifier connected to a second terminal of the second FET at an inverted input terminal, another non-inverted input terminal thereof being grounded, an output thereof being connected to the common FET gate connected point, a resistor receiving the correction factor Z at a terminal thereof and another terminal being connected to the connected point of the second terminal of the second FET and the input terminal of the second operational amplifier, a first operational amplifier having the same operational characteristic as the second operational amplifier and connected to another terminal of the first FET at an inverted input terminal, another non-inverted input terminal being grounded, and a feedback resistor connected between the inverted input terminal and an output of the first operational amplifier, and having the same resistance as the resistor.

The light receiver may comprise a four-division light receiver or two-division light receiver.

The optical disk may be provided with reflection-type semi V-shaped grooves, transparent-type semi V-shaped grooves, reflection-type U-shaped grooves, or transparent-type U-shaped grooves.

The control unit may comprise a microprocessor unit.

According to a second aspect of the present invention, there is provided track servo circuitry, for an optical disk system of the type in which an optical disk having indentations such as grooves, is illuminated by a light beam, the circuitry comprising:-

adding means arranged to receive signals from a light receiver and operable to produce a sum signal X, representing an amount of light received from the disk;

subtracting means arranged to receive signals from the light receiver and operable to produce a first error signal Y, which signal represents an error in the track of the light beam for a given indentation profile; and

correcting means arranged to calculate a second error signal E, including means for dividing the first error signal Y by the sum signal X;

characterised by:-

generating means arranged to detect a peak amplitude of the second error signal E and to generate a correction signal Z therefrom, the correction signal Z representing a degree of imbalance between said detected peak amplitude W of the second error signal E and a predetermined amplitude $W_s$; and in that

said correcting means are arranged to calculate the second error signal E as the value $(Y \cdot Z)/X$, whereby the second error signal E is corrected for the effect of the indentation profile.

Reference is made, by way of example, to the accompanying drawings, in which:

Fig. 1 is a block diagram of an optical disk drive system to which the present invention is applied;

Figs. 2a and 2b are graphs explaining a beam focus in Fig. 1;

Figs. 3a to 3c are views explaining detection of light reflected from a groove of an optical disk in connection with Figs. 2b;

Fig. 4 is a graph explaining generation of a track error signal in Fig. 1;

Fig. 5 is a circuit diagram of an existing track servo control system;

Figs. 6a and 6b are a sectional view of a V-shaped groove and a graph of a track error signal generated by a light reflected from the V-shaped groove;

Figs. 7a and 7b are a sectional view of a U-shaped groove and a graph of a track error signal generated by a light from the U-shaped groove;

Fig. 8 is a graph representing a relationship between a groove edge slope and a track error signal;

Fig. 9 is a circuit diagram of an embodiment of a track servo control system in accordance with the present invention;

Fig. 10 is a specific circuit diagram of an adjustment circuit shown in Fig. 9;

Fig. 11 is a flow chart explaining the operation of the track servo control system shown in Fig. 9; and

Figs. 12a to 12c are graphs explaining the operation of the track servo control system shown in Fig. 9.

Before describing the preferred embodiment of the present invention, an optical disk drive system and a existing track servo control system therein will be described to provide an easy understanding of an optical disk control and to distinguish the differences between the existing track servo control system and the embodiment of the present invention.

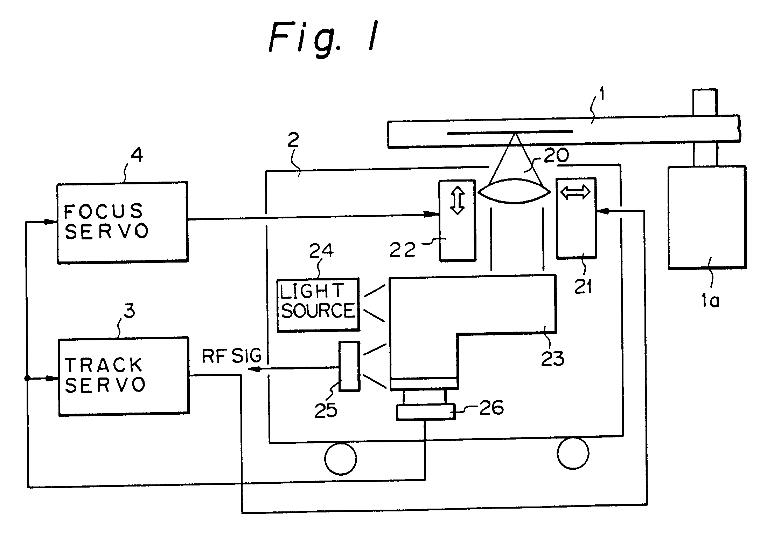

Referring to Fig. 1, an optical disk drive system includes an optical disk 1 rotated by a motor 1a, an optical head 2, a track servo portion 3', and a focus servo portion 4. The optical head 2 includes an object lens 20, a track actuator 21 having a drive coil, a focus actuator 22 having a drive coil, an optical system 23, a light source 24 having a semiconductor laser diode, a light receiver 25, and a four-division light receiver 26.

First, in a seek control mode, the optical head 2 is moved to a desired track on the optical disk 1. Second, in a fine position control mode, the optical head 2 is finely positioned at the desired track. During the fine position control mode, a data read from or a data write to the desired track can be carried out. To carry out the data read or the data write, light emitted from the light source 24 in the optical head 2 is led to the object lens 20 through the optical system 23 and focused on a groove of the track in the optical disk 1. A beam spot focused at the object lens 20 and exposed on the groove is reflected, and the reflected beam spot is received at the optical system 23 through the object lens 20. The beam spot received at the optical system 23 is supplied to the light receiver 25 to generate a reproduction signal RF. The reproduction signal is used for a data read and a level control. Also, the beam spot received at the optical system 23 is supplied to the four-division light receiver 26 to output four electrical signals corresponding to received light signals and used for generating a track error signal TES. The generation of the track error signal TES will be described later.

The optical disk 1 is provided with a large amount of grooves, forming tracks or pits, in a radial direction. A pitch between adjacent grooves is for example 1.6 $\mu$m. As the pitch is very small, a small eccentricity in the rotation of the disk may result in a large track displacement. In addition, the optical disk 1 is not perfectly even in the plane thereof, and this results in an undulating motion of the optical disk 1, to further displace the focus of the beam spot exposed at the groove. Note, the beam spot must be focused on the groove within a range of 1 $\mu$m.

The focus servo portion 4 receives the track error signal TES from the four-division light receiver 26 and adjusts the focus position of the object lens 20 by moving the object lens 20 in a vertical direction, through the focus actuator 22 connected to the object lens 22. The track servo portion 3' also receives the track error signal TES from the four-division light receiver 26 and adjusts a track position of the object lens 20 by moving the object lens 20 in a horizontal direction, through the track actuator 21, in response to the track error signal TES.

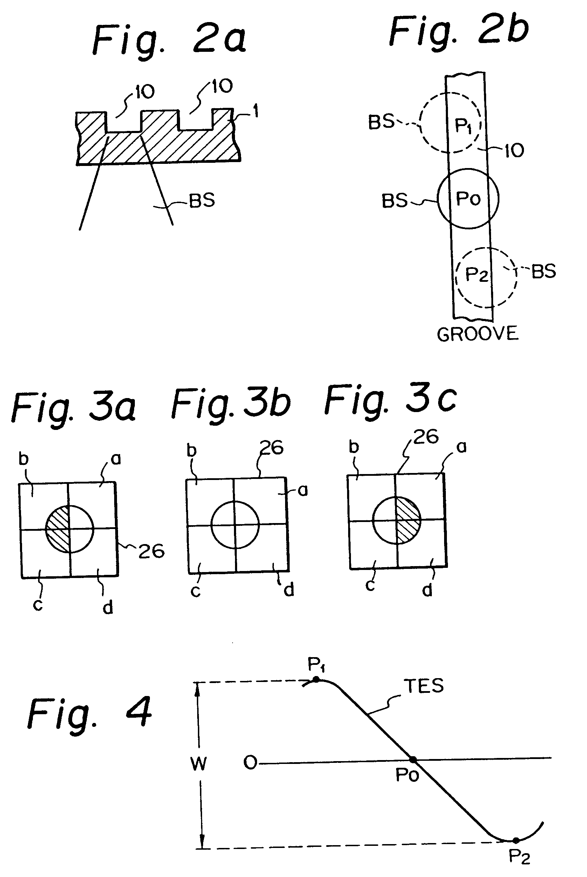

The operation of the track servo control will now be described in detail. The track servo control uses a diffraction of the beam spot BS by the groove 10 of the optical disk 1, as shown in Fig. 2a. Namely, a reflection light quantity distribution at the four-division light receiver 26 is varied in response to the position in the groove 10 of the beam spot BS, and thus a change of the light diffraction therefrom occurs as shown in Fig. 2b. The track error signal TES is obtained by using the change of the light diffraction. The four-division light receiver 26 consists of four light sensors a, b, c, and d, and outputs four electrical signals La, Lb, Lc, and Ld corresponding to the received light signals, respectively. The track error signal TES is defined by the following formula:

$$TES = (La + Ld) - (Lb + Lc) \qquad (1)$$

When a center of the beam spot BS is at a position $P_1$ shown in Fig. 2b, two sensors a and d receive the reflected light as shown in Fig. 3a. As a result, the track error signal TES is a positive maximum value as shown in Fig. 4, in accordance with the formula (1). When a center of the beam spot BS is at a position $P_0$ as shown in Fig. 2b, the track error signal TES is 0 (zero) as shown in Fig. 4. Conversely, when a center of the beam spot BS is at a position $P_2$ as shown in Fig. 2b, the track error signal TES is a negative minimum value as shown in Fig. 4. Accordingly, by using the track error signal TES, the track servo portion

3′ drives the object lens 20 by using the track actuator 21 to place a center of the beam spot BS at a center of the groove 10 of the optical disk 1.

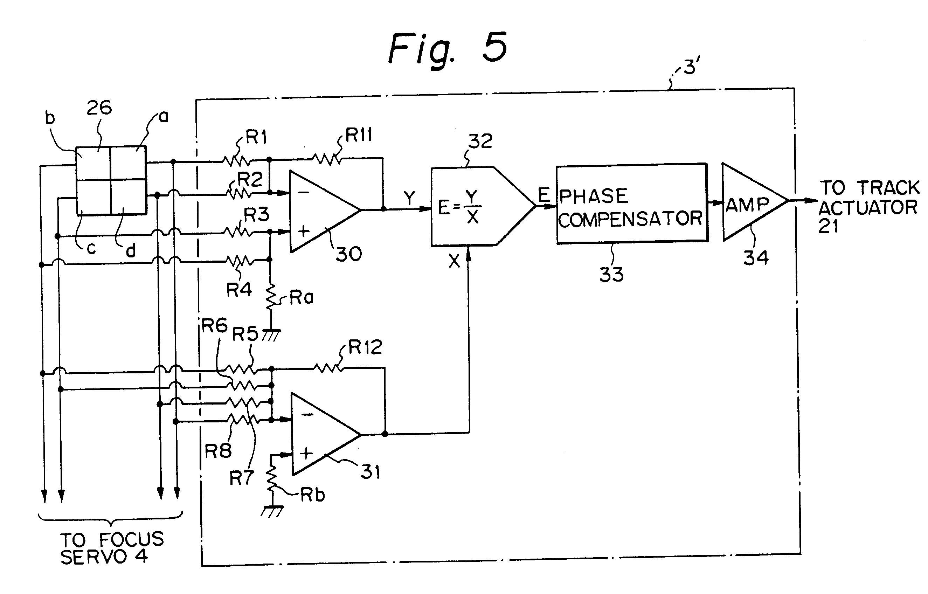

Referring to Fig. 5, an existing track servo portion 3′ will be described. The track servo portion 3′ includes input resistors R1 to R8, bias resistors Ra and Rb, an operational amplifier 30 functioning as a subtractor, an operational amplifier 31 functioning as an adder, feedback resistors R11 and R12, a divider 32, a phase compensator 33, and a power amplifier 34. The operational amplifier 30 receives the four light sensed signals La, Lb, Lc, and Ld from the four-division light receiver 26 and outputs the track error signal TES or Y in Fig. 5 in accordance with the formula (1). The operational amplifier 31 receives the four light sensed signals La, Lb, Lc, and Ld and outputs a sum of reflected light signals in accordance with the following formula:

$$X = La + Lb + Lc + Ld \qquad (2)$$

The divider 32 divides the track error signal Y by the sum reflection light signal X and outputs an automatic gain controlled value E. Namely, the automatic gain control or an adjustment of an amplitude of the track error signal TES (or Y) enables an even control of a difference in an intensity of the exposed beam spot when the data read and the data write are carried out and a variation of a reflection of the beam spot exists. The phase compensator 33 compensates a phase of the automatic gain controlled signal E. The power amplifier 34 amplifies the compensated and automatic gain controlled signal to a level at which the track actuator 21 can be driven, and the object lens 20 is moved to position a center of the beam spot BS therefrom at a center of the groove 10.

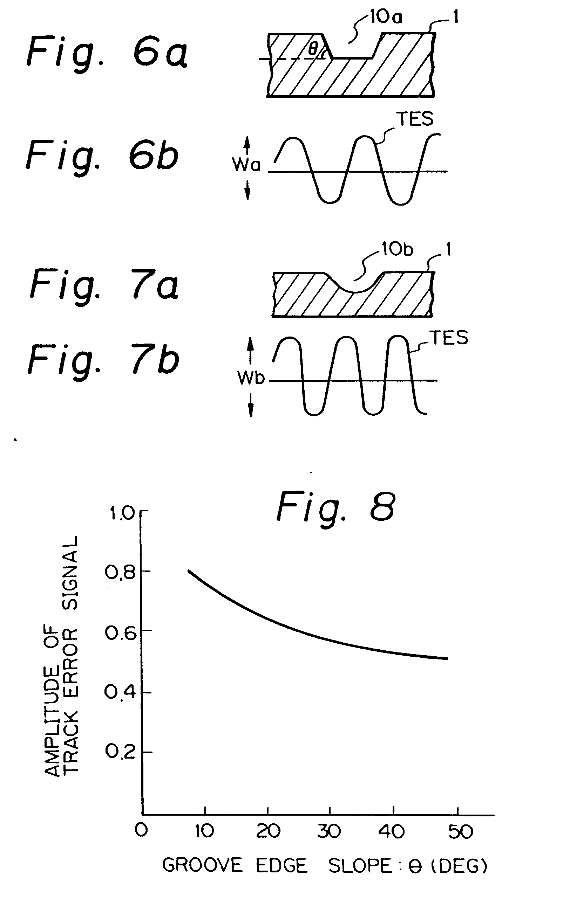

The optical disks used in the optical disk system may differ : namely, grooves in one optical disk have a semi V-shape with a slope $\theta$ (degree) as shown in Fig. 6a, and grooves in another optical disk have a U-shapes with a smooth slope as shown in Fig. 7a. Figure 6b shows a wave form of a track error signal TES when the optical disk having the groove 10a as shown in Fig. 6a is used. Figure 7b shows a wave form of a track error signal TES when the optical disk having the groove 10b as shown in Fig. 7a is used. As can be seen by comparing Figs. 6b and 7b, the amplitudes Wa and Wb and frequencies are different. In addition, an amplitude is varied by a slope of the semi V-shaped groove or the U-shaped groove. Figure 8 shows a change of an amplitude caused by a change of a groove edge slope. An ordinate in Fig. 8 shows a normalized amplitude of a track error signal. Furthermore, an amplitude is varied in response to a depth and a width of a groove. Optical disks are subject to a dispersion (variation) of a groove shape due to differences in manufacture, and/or variations in production conditions. This dispersion varies an amplitude and a frequency of a track error signal.

An optical disk system should be able to handle a variety of different optical disks. However, a sum of the reflected light obtained at the operational amplifier 31 shown in Fig. 5 does not show such differences. Accordingly, the track servo control system cannot adjust (compensate for) a difference of an amplitude of a track error signal, in spite of the execution of the automatic gain control. As a result, a servo gain may be varied and an out of servo scope and/or an abnormal oscillation of an optical head may occur.

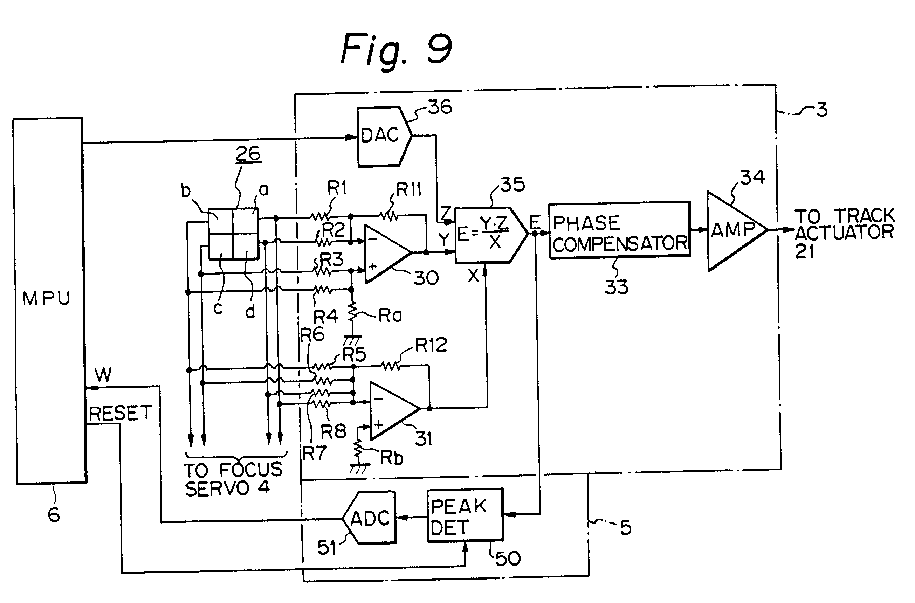

Referring to Fig. 9, an embodiment of a track servo control system will now be described.

A track servo control system consists of a microprocessor unit (MPU) 6 such as an INTEL-8031, a track servo portion 3, a peak detection portion 5, the four-division light receiver 26, and the track actuator 21. The MPU 6 is used for focus servo control, track servo control, and read/write operations. The track servo portion 3 is provided with a digital-to-analog converter (DAC) 36 in addition to the track servo portion 3′ shown in Fig. 5. The divider 32 shown in Fig. 5 is replaced by a correction circuit 35. Other circuits of the track servo portion 3 shown in Fig. 9 are the same as those of the track servo portion 3′ shown in Fig. 5. The peak detection portion 5 consists of a peak detector 50 and an analog-to-digital converter (ADC) 51. The peak detector 50 detects a peak of an output of the correction circuit 35, and the ADC 51 converts the peak analog value from the peak detector 50 into a peak digital value.

The correction circuit 35 calculates a corrected track error signal E in accordance with the following formula:

$$E = \frac{Y \cdot Z}{X} \qquad \qquad \ldots (3)$$

where,

    X    denotes a sum of all reflected light obtained at the operational amplifier 31 in accordance with the formula (2),

Y  denotes a track error signal TES, obtained at the operational amplifier 30 in accordance with the formula (1), and

Z  denotes a correction factor supplied from the MPU 6 through the DAC 36.

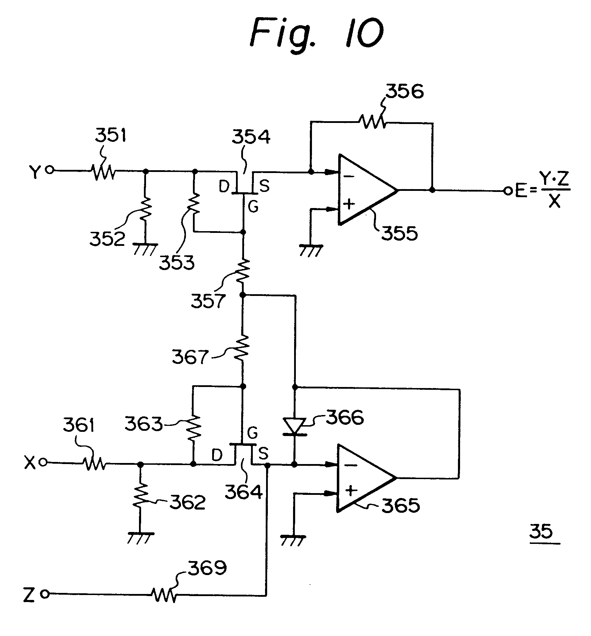

Figure 10 shows a concrete circuit diagram of the correction circuit 35. The correction circuit 35 includes input resistors 351, 361, and 369, bias resistors 352 and 362, FET's 354 and 364, bypass resistors 353 and 363, series resistors 357 and 367, operational amplifiers 355 and 365, a feedback resistor 356 and a diode 366. The correction circuit 35 uses a characteristic that a resistance $R_{DS}$ between a drain and a source of the FET is varied in response to a gate voltage. The operational amplifier 365 operates to maintain an input voltage of an inverted input terminal of the amplifier 365 at zero volt by a negative feedback of an output therefrom to a gate of the FET 364. The FET's 354 and 364 are identical, and thus both FET's have a same source-drain resistance $R_{DS}$ when a same gate voltage is supplied thereto. When an input Z of -1 V is supplied to the resistor 369 having a resistance R1 and an input X of +1 V is supplied to the drain of the FET 364 through the resistor 361, the operational amplifier 365 controls the gate of the FET 364 to maintain the input voltage of the inverted input terminal thereof at zero volt; namely, to make the drain-source resistance $R_{DS}$ equal to the resistance R1 of the resistor 369. When an input Y of +1 V is supplied to a drain of the FET 354 and a resistance R2 of the resistor 356 is equal to the resistance R1, the drain-source resistance $R_{DS}$ of the FET 354 becomes equal to the resistance R2. As the drain-source resistance $R_{DS}$ of the FET 354 is equal to the resistance R2, a gain of the operational amplifier 355 becomes -1 to output an output E of -1 V. When the input X of +0.5 V is supplied to the FET 364, the drain-source resistance $R_{DS}$ of the FET's 354 and 364 becomes a half of the resistance R1 or R2, and as a result, the gain of the operational amplifier 355 becomes -2 to output an output E of -2 V. When the input X of +1 V, the input Z of -0.5 V and the input Y of +1 V are supplied, the drain-source resistances $R_{DS}$ are double the resistance R1 or R2. Accordingly, the gain of the operational amplifier 355 becomes -1/2 to output an output E of -0.5 V.

The circuit parameters of the correction circuit 35 are as follows:

FETs 354 and 364: 2N4393

Diode 366: IS1588

Operational amplifiers 355 and 365: TL082 (Dual)

Input voltage of Y: -2 to +2 V

Input voltage of X: 0 to +2 V

Input voltage of Z: -10 to 0 V

Resistance R1 and R2: 68 kΩ

Resistance of resistors 351 and 361: 910 Ω

Resistance of resistors 352 and 362: 100 Ω

Resistance of resistors 353, 363, 357, and 367: 600 kΩ

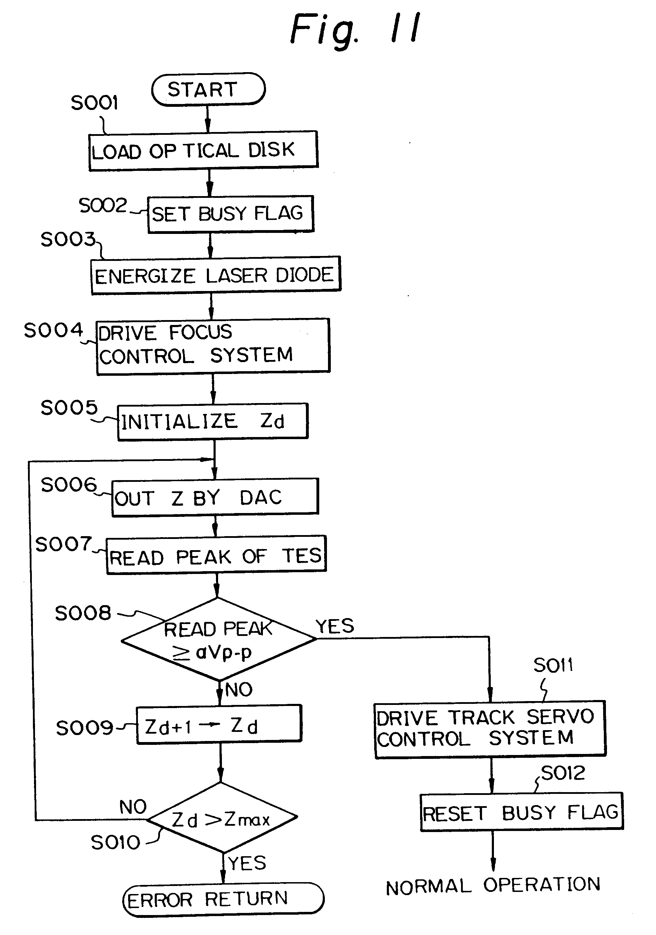

Referring to Fig. 11, the operation of the track servo control system shown in Fig. 9 will be described. The track signal adjustment is carried out upon every start up or restart of the optical disk system, or upon every change of an optical disk, prior to a start of a normal track servo control.

When the power is made ON or a restart is initiated, the MPU 6 starts operation.

### Steps 001 and 002 (S001 and S002 in Fig. 11)

When a new optical disk is loaded, the MPU 6 sets a busy flag to inhibit the issue of a command from a host controller (not shown).

### Steps 003 and 004 (S003 and S004)

The MPU 6 energizes the laser diode in the light source 24 shown in Fig. 1 to emit light from the light source 24 (S003). The MPU 6 also drives the focus servo control system to focus the beam spot on a track on the optical disk by moving the object lens 20 through the focus actuator 22 shown in Fig. 1 (S004). The four-division light receiver 26 receives a reflected light.

### Step 005 (S005)

The MPU 6 initializes a correction factor Zd. An initial correction factor of the Zd may be zero.

### Steps 006 to 008 (S006 to S008)

The MPU 6 outputs the correction factor Zd n digital form to the DAC 36 (S006). The DAC 36 outputs an analog correction factor Z corresponding to the digital correction factor Zd to the correction circuit 35. The MPU 6 reads a peak of the corrected track servo signal TES through the peak detection circuit 50 and the ADC 51 (S007). After the peak read, the MPU 6 outputs a reset pulse RESET to the peak detection circuit 50 to clear the held peak value.

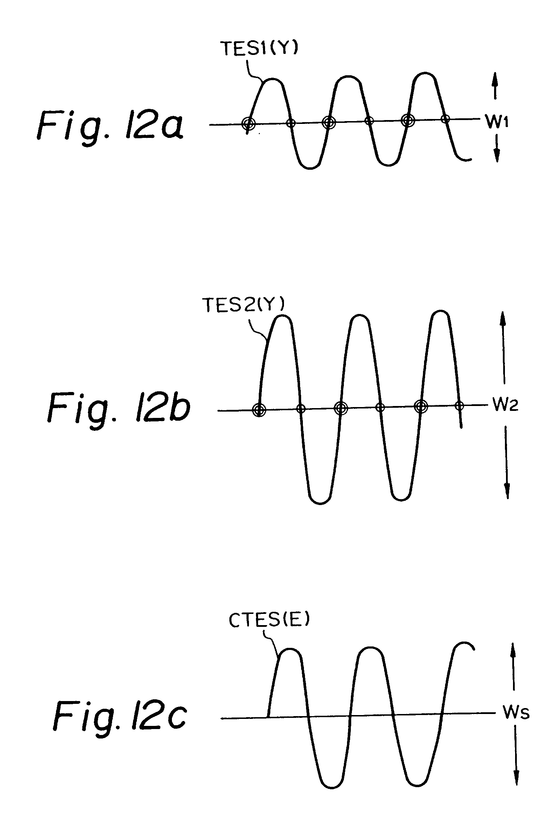

Figures 12a and 12b show track error signals TES1(Y) and TES2(Y) of different groove shapes. In Figs. 12a and 12b, small circles indicate centers of the grooves and double circles indicate adjacent grooves. The period of the track error signals may be approximately 1 ms, and accordingly, the above peak read and reset can be carried out within 1 ms.

The track error signal TES obtained at the operational amplifier 30 varies in response to a variation of the shape of the grooves, as shown in Figs. 12a and 12b. The variation of the track error signal TES can be corrected at the correction circuit 35 as a correction track error signal CTES having a same amplitude Ws regardless of a variation of amplitudes $W_1$ shown in Fig. 12a and $W_2$ shown in Fig. 12b, by suitably adjusting the correction factor Zd.

The MPU 6 checks whether or not the read peak has reached or exceeded a predetermined peak to peak voltage $aV_{P-P}$, for example $aV_{P-P} = 1.0$ V (S008).

### Steps 008 to 010 (S008 to S010)

When the read peak has not reached or exceeded the predetermined peak to peak voltage $aV_{P-P}$, the MPU 6 increases the correction factor Zd by one (S009). The MPU 6 changes the control to step 006 (S006) and the operation of steps 006 to 009 (S006 to S010) will be continued until the read peak reaches or exceeds the predetermined peak to peak voltage $aV_{P-P}$, unless the correction factor Zd exceeds a maximum value Zmax (S010). If the correction factor Zd exceeds the maximum value Zmax, the MPU 6 terminates the track signal adjustment.

### Steps 008, 011 and 012 (S008, S011 and S012)

When the read peak reaches or exceeds the predetermined peak to peak voltage $aV_{P-P}$, the MPU 6 holds the correction factor Zd, and as a result, the DAC 36 continues the analog output Z corresponding to the held correction factor Zd to the correction circuit 35. The correction circuit 35 then calculates the correction track error signal CTES or E in accordance with the equation (3) by using the correction factor Z from the DAC 36. The MPU 6 drives the track servo control system (S011). Thereafter, the MPU 6 resets the busy flag to permit issue of a command from the host controller (S012), and the normal operation of the optical disk system can be carried out.

When the MPU 6 receives a seek command from the host controller, first a seek control is carried out, and then the track servo control is carried out using the correction track error signal CTES. The amplitude of the correction track error signal is normalized regardless of the shape of the grooves of the optical disk, and accordingly, the track servo control can be achieved safely and accurately regardless of the type of optical disk.

In Fig. 11, the initial value of the Zd can be set to a predetermined value greater than zero to speed-up the track signal adjustment.

Also, the initial value of the Zd can be set to a predetermined value equal to a previously obtained correction factor. Also, the correction factor Zd can be increased or decreased by one in response to a value of the read peak.

When the final correction amplitude Ws shown in Fig. 12c is constant and is already known, the correction factor Zd can be formed by the following formula:

$$Zd = \frac{W}{Ws} \qquad (4)$$

where,

W     denotes the read value of the peak.

The above track signal adjustment can be carried out not only at the start-up time, the restart time, and the loading of the optical disk, as described above, but also periodically and/or at a change from a read to a write and vice versa.

In the above embodiment, a reflection type optical disk as shown in Figs. 6a and 7a has been discussed, but the present invention can be also applied to a transparent type optical disk by installing a light receiving system above the optical disk 1 shown in Fig. 1.

A four-division light receiver 26 as shown in Figs. 3a to 3c has been described. However, the present invention can be achieved by using any other light receiver, for generating source signals used for a track error signal TES and a sum of the source signals, such as a two-division light receiver (not shown).

Also, the light receiver 25 for generating the RF signal and the light receiver 26 as shown in Fig. 1 can be combined and used in common.

In Fig. 1, the track actuator 21 can rotate both the object lens 20 and the optical system 23, instead of just the horizontal movement of the object lens 20.

Although the above explanation has been made with reference to grooved disks, the present invention may also be applicable to disks carrying other forms of indentation.

To summarise, as explained above the present invention concerns an apparatus for adjusting a track signal used for a track servo control to ensure a stable track servo control for a variety of different optical disks.

## Claims

1. An optical disk system comprising:-
    an optical disk (1) provided with a plurality of grooves for data storage;
    an optical head (2) having an object lens (20), a light source (24), a light receiver (26), an optical system (23) provided among the light source, the object lens and the light receiver for directing light emitted from the light source onto the object lens and for introducing light from the groove to the light receiver, a focus actuator (22) for moving the object lens to focus the light from the object lens on the groove, and a track actuator (21) for moving the object lens to position the light from the object lens at a center of the groove;
    a focus servo portion (4) for driving the focus actuator;
    a track servo portion (3) for driving the track actuator, and having a circuit (30) for receiving signals from the light receiver and generating a track error signal Y on the basis of those signals, a summing circuit (31) for receiving signals from the light receiver and generating a sum signal X representing the amount of light received by the light receiver, a correction circuit (35) including means for dividing the track error signal Y by the sum signal X, and a circuit (33) for phase-adjusting the corrected value;
    characterised in that:-
    said correction circuit (35) calculates a value $E = (Y \cdot Z)/X$, where Z is a correction factor;
    a circuit (5) is provided for detecting a peak W of the value E calculated at the correction circuit (35); and in that
    control means (6) are provided for controlling the focus servo portion (4) and the track servo portion (3), and for adjusting a track signal, the control means being operable to produce the correction factor Z as a numerical value representing a degree of imbalance between said detected peak W of the value E and a predetermined normalized amplitude $W_s$, so as to normalize the calculated value E, whereby the track servo control is carried out by using the normalized track error signal E.

2. An optical disk system according to claim 1, wherein the adjustment of the correction factor Z for normalizing the value E calculated at the correction circuit (35) is carried out by successively increasing or decreasing the correction factor until the peak W of the calculated value E lies within a predetermined range.

3. An optical disk system according to claim 1, wherein the adjustment of the correction factor Z for normalizing the value E calculated at the correction circuit (35) is carried out by calculating $Z = W/Ws$.

4. An optical disk system according to claim 1,2 or 3, wherein the adjustment of the track signal is carried out just after the energization of the focus servo control and prior to the energization of the track servo control.

5. An optical disk system according to any preceding claim, wherein the adjustment of the track signal is carried out periodically in a normal operation.

6. An optical disk system according to any preceding claim, wherein the track servo portion (3) includes a digital-to-analog converter (36) for receiving the digital correction factor from the control unit (6), converting that factor into an analog correction factor and supplying same to the correction circuit (35),

wherein the track error signal generation circuit (30), the summing circuit (31) and the correction circuit (35) are formed by analog circuits,

and wherein the peak detection circuit (5) includes an analog peak detection circuit (50) for receiving the output from the correction circuit (35) and holding a maximum value, and an analog-to-digital converter (51) for converting the analog maximum value held at the peak detection circuit into a digital value and supplying the same to the control means (6), the maximum value held at the peak detection circuit being reset, in use, by the control means.

7. An optical disk system according to claim 6, wherein the correction circuit (35) includes two FET's (354, 364) having like drain-source resistance and gates which are commonly connected, a first terminal (D) of the first FET (354) receiving the track error signal:Y, a first terminal (D) of the second FET (364) for receiving the sum light signal X,

a second operational amplifier (365) connected to a second terminal (S) of the second FET (364) at an inverted input terminal, another non-inverted input terminal thereof being grounded, an output thereof being connected to the common FET gate connected point,

a resistor (369) for receiving the correction factor Z at a terminal thereof and another terminal being connected to the connected point of the second terminal (S) of the second FET (364) and the input terminal of the second operational amplifier,

a first operational amplifier (355) having a corresponding operational characteristic as the second operational amplifier (365) and connected to another terminal (S) of the first FET (354) at an inverted input terminal, another non-inverted input terminal being grounded, and

a feedback resistor (356) connected between the inverted input terminal and an output of the first operational amplifier, and having a corresponding resistance as the resistor (369).

8. An optical disk system according to any preceding claim, wherein the light receiver comprises a four-division light receiver.

9. An optical disk system according to any one of claims 1 to 7, wherein the light receiver comprises a two-division light receiver.

10. An optical disk system according to any preceding claim, wherein the optical disk is provided with a plurality of grooves of one of the following types: reflection-type semi V-shaped grooves, transparent-type semi V-shaped grooves, reflection-type U-shaped grooves, and transparent-type U-shaped grooves.

11. An optical disk system according to any preceding claim, wherein the control means (6) comprises a microprocessor unit.

12. Track servo circuitry, for an optical disk system of the type in which an optical disk having indentations such as grooves, is illuminated by a light beam, the circuitry comprising:-

adding means (31) arranged to receive signals from a light receiver (26) and operable to produce a sum signal X, representing an amount of light received from the disk;

subtracting means (30) arranged to receive signals from the light receiver (26) and operable to produce a first error signal Y, which signal represents an error in the track of the light beam for a given indentation profile; and

correcting means (35) arranged to calculate a second error signal E, including means for dividing the first error signal Y by the sum signal X;

characterised by:-

generating means (50, 51, 6, 36) arranged to detect a peak amplitude of the second error signal E and to generate a correction signal Z therefrom, the correction signal Z representing a degree of imbalance between said detected peak amplitude W of the second error signal E and a predetermined amplitude $W_s$; and in that

said correcting means (35) are arranged to calculate the second error signal E as the value $(Y \cdot Z)/X$, whereby the second error signal E is corrected for the effect of the indentation profile.

**Patentansprüche**

1. Optisches Plattensystem mit:

einer optischen Platte (1), die mit einer Vielzahl von Rillen zur Datenspeicherung versehen ist;

einem optischen Kopf (2) mit einer Objektivlinse (20), einer Lichtquelle (24), einem Lichtempfänger (26), einem optischen System (23), das bei der Lichtquelle, der Ojektivlinse und dem Lichtempfänger zum Richten von Licht, das von der Lichtquelle auf die Objektivlinse emittiert wird, und zum Einbringen von Licht von der Rille in den Lichtempfänger vorgesehen ist, einem Fokusstellarm (22) zum Bewegen der Objektivlinse, um Licht von der Objektivlinse auf die Rille zu fokussieren, und einem Spurstellarm (21) zum Bewegen der Objektivlinse, um das Licht von der Objektivlinse an ein Zentrum der Rille zu positionieren;

einem Fokusservoabschnitt (4) zum Antreiben des Fokusstellarms;

einem Spurservoabschnitt (3) zum Antreiben des Spurstellarms und mit einer Schaltung (30) zum Empfangen von Signalen aus dem Lichtempfänger und zum Erzeugen eines Spurfehlersignals Y auf der Basis jener Signale, einer Summierungsschaltung (31) zum Empfangen von Signalen vom Lichtempfänger und zum Erzeugen eines Summensignals X, das die vom Lichtempfänger empfangene Lichtmenge repräsentiert, einer Korrekturschaltung (35) mit einem Mittel zum Teilen des Spurfehlersignals Y durch das Summensignal X, und einer Schaltung (33) zum Phaseneinstellen des korrigierten Wertes;

dadurch gekennzeichnet, daß:

die Korrekturschaltung (35) einen Wert $E = (Y \cdot Z)/X$ berechnet, wo Z ein Korrekturfaktor ist;

eine Schaltung (5) zum Detektieren eines Spitzenwertes W des Wertes E vorgesehen ist, der bei der Korrekturschaltung (35) berechnet wird; und daß

Steuerungsmittel (6) zum Steuern des Fokusservoabschnitts (4) und des Spurservoabschnitts (3) und zum Einstellen eines Spursignals vorgesehen sind, welche Steuerungsmittel betriebsfähig sind, um den Korrekturfaktor Z als einen numerischen Wert zu erzeugen, der einen Grad an Unausgewogenheit zwischen dem detektierten Spitzenwert W des Wertes E und einer vorbestimmten, normierten Amplitude $W_s$ darstellt, um den berechneten Wert E zu normieren, wodurch die Spurservosteuerung unter Verwenden des normierten Spurfehlersignals E ausgeführt wird.

2. Optisches Plattensystem nach Anspruch 1, worin die Einstellung des Korrekturfaktors Z zum Normieren des Wertes E, der bei der Korrekturschaltung (35) berechnet wird, durch aufeinanderfolgendes Vergrößern oder Verkleinern des Korrekturfaktors ausgeführt wird, bis der Spitzenwert W des berechneten Wertes E innerhalb eines vorbestimmten Bereiches liegt.

3. Optisches Plattensystem nach Anspruch 1, worin die Einstellung des Korrekturfaktors Z zum Normieren des Wertes E, der bei der Korrekturschaltung (35) berechnet wird, durch Berechnen von $Z = W/Ws$ ausgeführt wird.

4. Optisches Plattensystem nach Anspruch 1, 2 oder 3, worin die Einstellung des Spursignals ausgeführt wird, unmittelbar nachdem der Fokusservosteuerung Energie zugeführt wurde und bevor der Spurservosteuerung Energie zugeführt wurde.

5. Optisches Plattensystem nach irgendeinem vorhergehenden Anspruch, worin die Einstellung des Spursignals in einem normalen Betrieb periodisch ausgeführt wird.

6. Optisches Plattensystem nach irgendeinem vorhergehenden Anspruch, worin der Spurservoabschnitt (3) einen Digital-zu-Analog-Konverter (36) zum Empfangen des digitalen Korrekturfaktors von der Steuerungseinheit (6), Umwandeln dieses Faktors in einen analogen Korrekturfaktor und zum Liefern desselben an die Korrekturschaltung (35) aufweist,

worin die Spurfehlersignal-Erzeugungsschaltung (30), die Summierungsschaltung (31) und die Korrekturschaltung (35) von Analogschaltungen gebildet werden,

und worin die Spitzenwert-Detektionsschaltung (5) eine analoge Spitzenwert-Detektionsschaltung (50) zum Empfangen des Ausgangs aus der Korrekturschaltung (35) und zum Halten eines maximalen Wertes, und einen Analog-zu-Digital-Konverter (51) zum Umwandeln des maximalen analogen Wertes, der bei der Spitzenwert-Detektionsschaltung gehalten wird, in einen digitalen Wert und zum Liefern desselben an die Steuerungsmittel (6) aufweist, welcher maximale, bei der Spitzenwert-Detektionsschaltung gehaltene Wert, bei Verwendung, von den Steuerungsmitteln zurückgesetzt wird.

**7.** Optisches Plattensystem nach Anspruch 6, worin die Korrekturschaltung (35) aufweist:

zwei FETs (354, 364) mit ähnlichem Senke-Quelle-Widerstandswert und Gates, welche gemeinsam verbunden sind, einem ersten Anschluß (D) des ersten FET (354), der das Spurfehlersignal Y empfängt, einem ersten Anschluß (D) des zweiten FET (364) zum Empfangen des Summenlichtsignals X,

einen zweiten Operationsverstärker (365), der mit einem zweiten Anschluß (S) des zweiten FET (364) an einem invertierten Eingangsanschluß verbunden ist und der einen weiteren, geerdeten, nicht-invertierten Eingangsanschluß aufweist und einen Ausgang, der mit dem gemeinsamen FET-Gate-Verbindungspunkt verbunden ist,

einen Widerstand (369) zum Empfangen des Korrekturfaktors Z an einem Anschluß davon und mit einem anderen Anschluß, der mit dem verbundenen Punkt des zweiten Anschlusses (S) des zweiten FET (364) und des Eingangsanschlusses des zweiten Operationsverstärkers verbunden ist,

einen ersten Operationsverstärker (355), der eine dem zweiten Operationsverstärker (365) entsprechende Charakteristik aufweist und mit einem anderen Anschluß (S) des ersten FET (354) an einem invertierten Eingangsanschluß verbunden ist und einem anderen nicht-invertierten Eingangsanschluß, der geerdet ist, und

einen Rückkoppelungswiderstand (356), der zwischen den invertierten Eingangsanschluß und einen Ausgang des ersten Operationsverstärkers geschaltet ist und einen dem Widerstand (369) entsprechenden Widerstandswert besitzt.

**8.** Optisches Plattensystem nach irgendeinem vorhergehenden Anspruch, worin der Lichtempfänger einen Vierteilungslichtempfänger aufweist.

**9.** Optisches Plattensystem nach irgendeinem der Ansprüche 1 bis 7, worin der Lichtempfänger einen Zweiteilungslichtempfänger aufweist.

**10.** Optisches Plattensystem nach irgendeinem vorhergehenden Anspruch, worin die optische Platte mit einer Vielzahl von Rillen einer der folgenden Arten versehen ist: halb-V-förmige Rillen vom Reflexionstypus, halb-V-förmige Rillen vom Transparenttypus, U-förmige Rillen vom Reflexionstypus und U-förmige Rillen vom Transparenttypus.

**11.** Optisches Plattensystem nach irgendeinem vorhergehenden Anspruch, worin die Steuerungsmittel (6) eine Mikroprozessoreinheit aufweisen.

**12.** Spurservoschaltung für ein optisches Plattensystem desjenigen Typus, in welchem eine optische Platte mit Vertiefungen, wie Rillen, von einem Lichtstrahl beleuchtet wird, welche Schaltung aufweist:

Addiermittel (31), die angeordnet sind, um Signale von einem Lichtempfänger (26) zu empfangen und betriebsfähig sind, ein Summensignal X zu erzeugen, welches eine von der Platte empfangene Lichtmenge repräsentiert;

Subtraktionsmittel (30), die angeordnet sind, um Signale vom Lichtempfänger (26) zu empfangen und betriebsfähig sind, um ein erstes Fehlersignal Y zu erzeugen, welches Signal einen Fehler in der Spur des Lichtstrahls für ein vorgegebenes Vertiefungsprofil repräsentiert; und

Korrekturmittel (35), die angeordnet sind, um ein zweites Fehlersignal E zu berechnen, mit Mitteln zum Teilen des ersten Fehlersignals Y durch das Summensignal X;

gekennzeichnet durch:

Erzeugungsmittel (50, 51, 6, 36), die angeordnet sind, um eine Spitzenamplitude des zweiten Fehlersignals E zu detektieren und ein Korrektursignal Z davon zu erzeugen, welches Korrektursignal Z einen Grad an Unausgewogenheit zwischen der detektierten Spitzenamplitude W des zweiten Fehlersignals E und einer vorbestimmten Amplitude $W_s$ repräsentiert; und gekennzeichnet dadurch, daß

die Korrekturmittel (35) angeordnet sind, um das zweite Fehlersignal E als den Wert $(Y \cdot Z)/X$ zu berechnen, wodurch das zweite Fehlersignal E um die Wirkung des Vertiefungsprofils korrigiert wird.

**Revendications**

**1.** Système à disque optique comprenant :

un disque optique (1) muni d'une pluralité de gorges pour stocker des données ;

une tête optique (2) comportant une lentille d'objectif (20), une source de lumière (24), un récepteur de lumière (26), un système optique (23) prévu entre la source de lumière, la lentille d'objectif et le récepteur de lumière pour diriger une lumière émise depuis la source de lumière sur la lentille d'objectif et pour introduire une lumière en provenance de la gorge sur le récepteur de lumière, un actionneur de focalisation (22) pour déplacer la lente d'objectif afin de focaliser la lumière en provenance de la lentille d'objectif sur la gorge et un actionneur de piste (21) pour déplacer la lentille d'objectif afin de positionner la lumière en provenance de la lentille d'objectif au centre de la gorge ;

une partie d'asservissement de focalisation (4) pour entraîner l'actionneur de focalisation ;

une partie d'asservissement de piste (3) pour entraîner l'actionneur de piste, et comportant un circuit (30) pour recevoir des signaux en provenance du récepteur de lumière et pour générer un signal d'erreur de piste Y sur la base de ces signaux, un circuit de sommation (31) pour recevoir des signaux en provenance du récepteur de lumière et pour générer un signal de somme X représentánt la quantité de lumière reçue par le récepteur de lumière, un circuit de correction (35) incluant un moyen pour diviser le signal d'erreur de piste Y par le signal de somme X et un circuit (33) pour régler en phase la valeur corrigée,

caractérisé en ce que :

ledit circuit de correction (35) calcule une valeur E = (Y.Z)/X, où Z est un facteur de correction ;

un circuit (5) est prévu pour détecter un pic W de la valeur E calculée au niveau du circuit de correction (35),

et en ce que :

un moyen de commande (6) est prévu pour commander la partie d'asservissement de focalisation (4) et la partie d'asservissement de piste (3) et pour régler un signal de piste, le moyen de commande pouvant être actionné pour produire le facteur de correction Z en tant que valeur numérique représentant un degré de déséquilibre entre ledit pic détecté W de la valeur E et une amplitude normalisée prédéterminée $W_S$ de manière à normaliser la valeur calculée E d'où il résulte que la commande d'asservissement de piste est mise en oeuvre en utilisant le signal d'erreur de piste normalisé E.

2. Système à disque optique selon la revendication 1, dans lequel le réglage du facteur de correction Z pour normaliser la valeur E calculée au niveau du circuit de correction (35) est mis en oeuvre en augmentant ou en diminuant successivement le facteur de correction jusqu'à ce que le pic W de la valeur calculée E s'inscrive à l'intérieur d'une plage prédéterminée.

3. Système à disque optique selon la revendication 1, dans lequel le réglage du facteur de correction Z pour normaliser la valeur E calculée au niveau du circuit de correction (35) est mis en oeuvre en calculant Z = W/Ws.

4. Système à disque optique selon la revendication 1, 2 ou 3, dans lequel le réglage du signal de piste est mis en oeuvre après l'excitation de la commande d'asservissement de focalisation et avant l'excitation de la commande d'asservissement de piste.

5. Système à disque optique selon l'une quelconque des revendications précédentes, dans lequel le réglage du signal de piste est mis en oeuvre périodiquement en fonctionnement normal.

6. Système à disque optique selon l'une quelconque des revendications précédentes, dans lequel la partie d'asservissement de piste (3) inclut un convertisseur numérique/analogique (36) pour recevoir le facteur de correction numérique en provenance de l'unité de commande (6), pour convertir ce facteur en un facteur de correction analogique et pour appliquer ce même facteur au circuit de correction (35), dans lequel le circuit de génération de signal d'erreur de piste (30), le circuit de sommation (31) et le circuit de correction (35) sont formés par des circuits analogiques, et dans lequel le circuit de détection de pic (5) inclut un circuit de détection de pic analogique (50) pour recevoir une sortie en provenance du circuit de correction (35) et pour bloquer une valeur maximum, et un convertisseur analogique/numérique (51) pour convertir la valeur maximum analogique bloquée au niveau du circuit de détection de pic en une valeur numérique et pour appliquer cette même valeur au moyen de commande (6), la valeur maximum bloquée au niveau du circuit de détection de pic étant remise à l'état initial en fonctionnement par le moyen de commande.

7. Système à disque optique selon la revendication 6, dans lequel le circuit de correction (35) inclut deux transistors à effet de champ (FET) (354, 364) comportant des résistances drain-source identiques et des grilles qui sont connectées en commun, une première borne (D) du premier FFT (354) recevant le signal d'erreur de piste Y, une première borne (D) du second FET (364) recevant le signal de lumière de somme X ;

un second amplificateur opérationnel (365) connecté à une seconde borne (S) du second FET (364) au niveau d'une borne d'entrée inversée, une autre borne d'entrée non inversée de celui-ci étant reliée à la masse, une sortie de celui-ci étant connectée au point de connexion commun des grilles de FET ;

une résistance (369) pour recevoir le facteur de correction Z au niveau d'une borne de celle-ci, son autre borne étant connectée au point de connexion de la seconde borne (5) du second FET (364) et à la borne d'entrée du second amplificateur opérationnel ;

un premier amplificateur opérationnel (355) présentant une caractéristique de fonctionnement correspondant à celle du second amplificateur opérationnel (365) et étant connecté à une autre borne (S) du premier FET (354) au niveau d'une borne d'entrée inversée, une autre borne d'entrée non inversée étant reliée à la masse ; et

une résistance de retour (356) connectée entre la borne d'entrée inversée et une sortie du premier amplificateur opérationnel et présentant une valeur de résistance correspondant à celle de la résistance (369).

8. Système à disque optique selon l'une quelconque des revendications précédentes, dans lequel le récepteur de lumière comprend un récepteur de lumière en quatre parties.

9. Système à disque optique selon l'une quelconque des revendications 1 à 7, dans lequel le récepteur de lumière comprend un récepteur de lumière en deux parties.

10. Système à disque optique selon l'une quelconque des revendications précédentes, dans lequel le disque optique est muni d'une pluralité de gorges de l'un des types suivants : des gorges conformées en demi-V du type réflexion, des gorges conformées en demi-V du type transparent, des gorges conformées en U du type réflexion et des gorges conformées en U du type transparent.

11. Système à disque optique selon l'une quelconque des revendications précédentes, dans lequel le moyen de commande (6) comprend une unite de microprocesseur.

12. Circuit d'asservissement de piste pour un système à disque optique du type dans lequel un disque optique comportant des indentations telles que des gorges est éclairé par un faisceau lumineux, le circuit comprenant :

un moyen d'addition (31) agencé pour recevoir des signaux en provenance d'un réflecteur de lumière (26) et pouvant fonctionner pour produire un signal de somme X qui représente une quantité de lumière reçue depuis le disque ;

un moyen de soustraction (30) agencé pour recevoir des signaux en provenance du récepteur de lumière (26) et pouvant fonctionner pour produire un premier signal d'erreur Y, lequel signal représente une erreur dans la piste du faisceau lumineux pour un profil d'indentation donné ; et

un moyen de correction (35) agencé pour calculer un second signal d'erreur E, incluant un moyen pour diviser le premier signal d'erreur Y par le signal de somme X,

caractérisé par :

un moyen de génération (50, 51, 6, 36) agencé pour détecter une amplitude de pic du second signal d'erreur E et pour générer un signal de correction Z à partir de celui-ci, le signal de correction Z représentant un degré de déséquilibre entre ladite amplitude de pic détectée W du second signal d'erreur E et une amplitude prédéterminée $W_S$ ;

et en ce que ledit moyen de correction (35) est agencé pour calculer le second signal d'erreur E en tant que valeur (Y.Z)/X d'où il résulte que le second signal d'erreur E est corrigé quant à l'effet du profil d'indentation.

Fig. I

EP 0 282 288 B1

Fig. 2a

Fig. 2b

Fig. 3a   Fig. 3b   Fig. 3c

Fig. 4

# Fig. 5

TO TRACK ACTUATOR 21

TO FOCUS SERVO 4

$E = \dfrac{Y}{X}$

EP 0 282 288 B1

Fig. 6a

Fig. 6b

Fig. 7a

Fig. 7b

Fig. 8

AMPLITUDE OF TRACK ERROR SIGNAL

GROOVE EDGE SLOPE : θ (DEG)

*Fig. 9*

EP 0 282 288 B1

# Fig. 10

$$E = \frac{Y \cdot Z}{X}$$

35

# Fig. 11

```
                    ┌─────────┐
                    │  START  │
         S001       └────┬────┘
            ┌────────────┴────────────┐
            │  LOAD OPTICAL DISK      │
            └────────────┬────────────┘
         S002   ┌────────┴────────┐
                │  SET BUSY FLAG  │
                └────────┬────────┘
         S003  ┌─────────┴─────────────┐
               │ ENERGIZE LASER DIODE  │
               └──────────┬────────────┘
         S004  ┌──────────┴────────────┐
               │ DRIVE FOCUS           │
               │ CONTROL SYSTEM        │
               └──────────┬────────────┘
         S005  ┌──────────┴────────────┐
               │ INITIALIZE Zd         │
               └──────────┬────────────┘
         S006  ┌──────────┴────────────┐
               │ OUT Z BY DAC          │
               └──────────┬────────────┘
         S007  ┌──────────┴────────────┐
               │ READ PEAK OF TES      │
               └──────────┬────────────┘
```

S008 — READ PEAK $\geq \alpha Vp\text{-}p$ — YES → S011 DRIVE TRACK SERVO CONTROL SYSTEM → S012 RESET BUSY FLAG → NORMAL OPERATION

NO ↓

S009 — $Zd+1 \rightarrow Zd$

S010 — $Zd > Zmax$ — NO / YES

ERROR RETURN

Fig. 12a

TES1(Y)

W1

Fig. 12b

TES2(Y)

W2

Fig. 12c

CTES(E)

Ws